# EUROPEAN PATENT APPLICATION

(11) **EP 3 388 948 A1**
(43) Date of publication of application: **17.10.2018**
(21) Application number: 16872717.0
(22) Date of filing: 21.10.2016
(51) Int. Cl.: G06F 13/00, G01C 21/26, H04M 1/00, H04M 11/00

(54) **INFORMATION TRANSFER SYSTEM, VEHICLE-MOUNTED TERMINAL, AND INFORMATION TRANSFER METHOD**

(30) Priority: 09.12.2015 JP 2015240271
(71) Applicant: Clarion Co., Ltd., Saitama-shi, Saitama 330-0081 (JP)
(72) Inventor: KONDO, Akihiro, Tokyo 100-8280 (JP); SEKIGUCHI, Takaaki, Tokyo 100-8280 (JP); NAGAI, Yasushi, Saitama-shi Saitama 330-0081 (JP)
(74) Representative: Strehl Schübel-Hopf & Partner
(86) International application number: PCT/JP2016/081272
(87) International publication number: WO 2017/098817

(57) **Abstract**

Information is transferred from a device to which the information is temporarily provided to another more suitable device as required, and hence it is possible to continue usage of a service or content comfortably on the device to which the information is transferred. Provided is an information transfer system including: an in-vehicle terminal; an information terminal; and a server, wherein the in-vehicle terminal includes a transfer information extraction module configured to extract, as transfer information, a part of acquired notification information that is to be transferred to the information terminal, wherein the server includes a notification information extraction module configured to transmit the transfer information acquired from the in-vehicle terminal to the information terminal at a predetermined timing, and wherein the information terminal includes a transfer information display module configured to display the transfer information acquired from the server.

## Description

### Technical Field

The present invention relates to an information transfer system, an in-vehicle terminal, and an information transfer method. The present invention claims priority to Japanese Patent Application No. 2015-240271 filed on December 9, 2015, the contents of which are incorporated herein by reference in its entirety for the designated states where incorporation by reference of literature is allowed.

### Background Art

In Patent Literature 1, there is described a "content provision system in which a server of an information center includes identification modules configured to grasp states of respective devices based on pieces of device information, a scene identification module configured to estimate a current scene of a user based on the states of the respective devices and to determine content to be provided, a service selection module configured to receive content from a service provider, and a provision method selection module configured to determine a device to which content is to be transmitted, and in which a controller of an in-vehicle device has a function of identifying again a scene of the user within a vehicle when content is transmitted and controlling output of the content depending on the identified scene."

### Citation List

### Patent Literature

[PTL 1] Japanese Patent Laid-open Publication No. 2015-53632

### Summary of Invention

### Technical Problem

In the above-mentioned technology of Patent Literature 1, content is provided in a mode suited to a user's situation. For example, a device to which content is to be provided is changed from an in-vehicle terminal to a mobile terminal depending on whether or not there is an occupant other than the user. However, with the technology of Patent Literature 1, once content is provided to a device, a device to which the content is to be provided cannot be further changed to another more suitable device depending on the user's situation.

In view of the above, it is an object of the present invention to provide an information transfer system capable of transferring information from a device to which the information is temporarily provided to another more suitable device as required.

### Solution to Problem

In order to solve the above-mentionedproblem, according to one embodiment of the present invention, there is provided an information transfer system including: an in-vehicle terminal; an information terminal; and a server, wherein the in-vehicle terminal includes a transfer information extraction module configured to extract, as transfer information, a part of acquired notification information that is to be transferred to the information terminal, wherein the server includes a notification information extraction module configured to transmit the transfer information acquired from the in-vehicle terminal to the information terminal at a predetermined timing, and wherein the information terminal includes a transfer information display module configured to display the transfer information acquired from the server.

### Advantageous Effects of Invention

With the information transfer system according to the present invention, it is possible to transfer information from a device to which the information is temporarily provided to another more suitable device as required, and hence it is possible to continue usage of a service or content comfortably on the device to which the information is transferred.

Problems, configurations, and effects other than those described above become apparent from the following description of embodiments of the present invention.

### Brief Description of Drawings

FIG. 1 is a diagram for illustrating an example of a schematic configuration of an information transfer system according to a first embodiment of the present invention.
FIG. 2 is a diagram for illustrating an example of hardware configurations of an in-vehicle terminal, an information terminal, and a server in the first embodiment of the present invention.
FIG. 3 is a diagram for illustrating an example of respective pieces of screen information to be displayed on the in-vehicle terminal and the information terminal in the first embodiment of the present invention.
FIG. 4 is a functional block diagram for illustrating an example of functional configurations of the in-vehicle terminal, the information terminal, and the server in the first embodiment of the present invention.
FIG. 5 is a table for showing an example of notification information in the first embodiment of the present invention.
FIG. 6 is a flowchart for illustrating an example of transfer information generation processing to be executed when a destination is set on the in-vehicle terminal in the first embodiment of the present invention.
FIG. 7 is a flowchart for illustrating an example of transfer information extraction processing in the first embodiment of the present invention.
FIG. 8 is a flowchart for illustrating an example of processing to be executed when a transfer instruction is received from a user in the transfer information generation processing in the first embodiment of the present invention.
FIG. 9 is a sequence diagram for illustrating an example of transfer information generation processing to be executed when a destination is not set in the first embodiment of the present invention.
FIG. 10 is a functional block diagram for illustrating an example of functional configurations of an information transfer system according to a second embodiment of the present invention.
FIG. 11 is a functional block diagram for illustrating an example of functional configurations of an information transfer system according to a third embodiment of the present invention.
FIG. 12 is a diagram for illustrating a screen example of the in-vehicle terminal on which information for obtaining from the user acceptance of update processing for an update program for a vehicle is displayed and a screen example of the information terminal on which the information is transferred from the in-vehicle terminal in a fourth embodiment of the present invention.
FIG. 13 is a functional block diagram for illustrating an example of functional configurations of an in-vehicle terminal, an information terminal, and a server in the fourth embodiment of the present invention.
FIG. 14 is a table for showing an example of notification information in the fourth embodiment of the present invention.
FIG. 15 is a table for showing an example of read information in the fourth embodiment of the present invention.
FIG. 16 is a diagram for illustrating a basic idea of a location of an operation authority and a vehicle operation in a fifth embodiment of the present invention.
FIG. 17 is a diagram for illustrating a screen example of the in-vehicle terminal for receiving a user's instruction on whether or not to transfer the operation authority from the in-vehicle terminal to the information terminal, and a screen example of the information terminal for receiving a user's instruction on whether or not to transfer the operation authority from the information terminal to the in-vehicle terminal in the fifth embodiment of the present invention.
FIG. 18 is a diagram for illustrating an example of schematic configurations of a vehicle including an in-vehicle terminal, an information terminal, and a server in the fifth embodiment of the present invention.
FIG. 19 is a sequence diagram for illustrating a flow of transferring the operation authority from the in-vehicle terminal to the information terminal in the fifth embodiment of the present invention.
FIG. 20 is a sequence diagram for illustrating an example of processing of authenticating the authority to operate the vehicle in the fifth embodiment of the present invention.
FIG. 21 is a sequence diagram for illustrating a case in which the vehicle is automatically controlled from the information terminal in the fifth embodiment of the present invention.
FIG. 22 is a sequence diagram for illustrating an example of a case in which the in-vehicle terminal performs automatic operation under a state in which the in-vehicle terminal has the operation authority in the fifth embodiment of the present invention.

### Description of Embodiments

In the following, a description is given of an information transfer system according to one embodiment of the present invention.

### <First Embodiment>

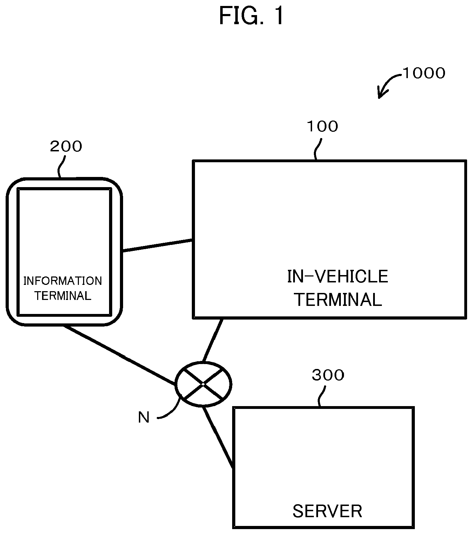

FIG. 1 is a diagram for illustrating an example of a schematic configuration of an information transfer system 1000 according to a first embodiment of the present invention. As illustrated in FIG. 1, the information transfer system 1000 includes an in-vehicle terminal100, an information terminal 200, and a server 300. Further, the in-vehicle terminal 100, the information terminal 200, and the server 300 are connected to one another in a manner that allows communication thereamong via a network N, for example, the Internet. Further, the in-vehicle terminal 100 and the information terminal 200 are connected to each another in a manner that allows communication therebetween through use of a short-range wireless communication standard, for example, Bluetooth (trademark).

The in-vehicle terminal 100 is implemented by a navigation device having a so-called navigation function involving, for example, searching for a recommended route, performing route guidance, and displaying traffic information. The in-vehicle terminal 100 is not limited thereto, and may also be a mobile terminal, such as a smartphone or a tablet terminal, having an application program for implementing the navigation function installed thereon.

The information terminal 200 is implemented by, for example, a mobile terminal such as a cell phone, a smartphone, a tablet terminal, or a personal data assistance (PDA).

The server 300 is an apparatus configured to provide various services to the in-vehicle terminal 100 and the information terminal 200, and is implemented by, for example, a computer such as a general-purpose computer or a workstation. The server 300 may also be a personal computer.

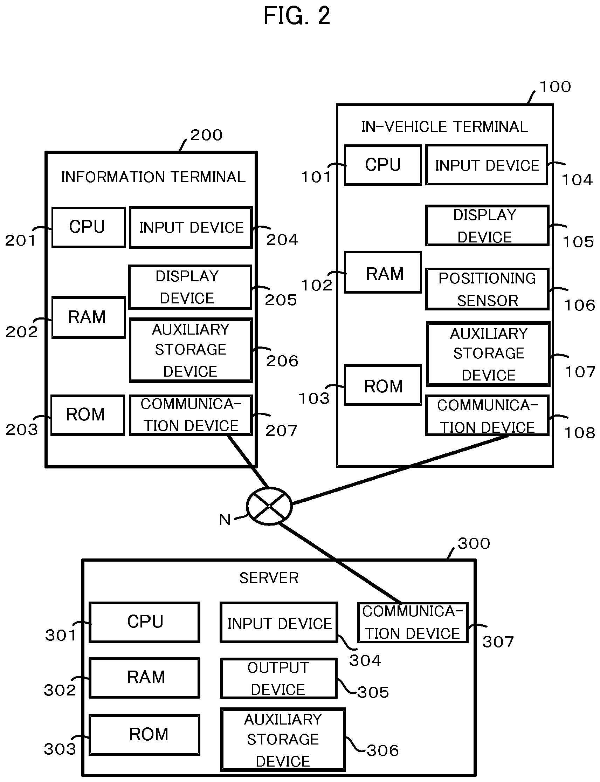

FIG. 2 is a diagram for illustrating an example of hardware configurations of the in-vehicle terminal 100, the information terminal 200, and the server 300. The in-vehicle terminal 100 includes a central processing unit (CPU) 101, a random access memory (RAM) 102, a read-only memory (ROM) 103, an input device 104, a display device 105, a positioning sensor 106, an auxiliary storage device 107, and a communication device 108.

The CPU 101 is a device (unit) configured to perform various types of processing of the in-vehicle terminal 100, such as numeric operations and control of each device. The RAM 102 is a memory capable of reading and writing data, which is configured to store calculation results and programs, for example. The ROM 103 is a read-only memory configured to store various programs to be used in the in-vehicle terminal 100, for example.

The input device 104 is a device for the in-vehicle terminal 100 to receive a predetermined input of instruction from a user, and includes arrow keys, a dial switch, and a touch panel, for example.

The display device 105 is a unit configured to display generated screen information in a display region, and includes a liquid crystal display or an organic EL display, for example.

The positioning sensor 106 is a device configured to detect a position of a vehicle on which the in-vehicle terminal 100 is mounted, and includes, for example, a vehicle speed sensor, a gyrosensor, and a global positioning system (GPS) sensor.

The auxiliary storage device 107 includes, for example, a recording medium at least capable of reading and writing data, such as a hard disk drive (HDD), a non-volatile memory card, or a solid state drive (SSD).

The communication device 108 is a communication unit configured to perform mutual communication to/from external devices (in this example, the information terminal 200 and the server 300) .

The information terminal 200 includes a CPU 201, a RAM 202, aROM203, an input device 204, a display device 205, an auxiliary storage device 206, and a communication device 207.

The input device 204 is a device for the information terminal 200 to receive a predetermined input of instruction from the user, and includes a touch panel and hardware switches assigned with predetermined functions (for example, a power button, volume control buttons, a home button) . The display device 205 is a liquid crystal display having a surface on which a touch panel is mounted. The auxiliary storage device 206 is a small-sized recording medium capable of being mounted to the information terminal 200, for example, a non-volatile memory card. Basic configurations of the CPU 201, the RAM 202, the ROM 203, and the communication device 207 are the same as those of the in-vehicle terminal 100, and hence a description thereof is omitted.

The server 300 includes a CPU 301, a RAM 302, a ROM 303, an input device 304, an output device 305, an auxiliary storage device 306, and a communication device 307. The output device 305 is a device configured to output (transmit), for example, a calculation result obtained by the CPU 301 to other devices of the server 300, or to the external devices via the communication device 307. Basic configurations of the devices other than the output device 305 are the same as those of the in-vehicle terminal 100, and hence a description thereof is omitted.

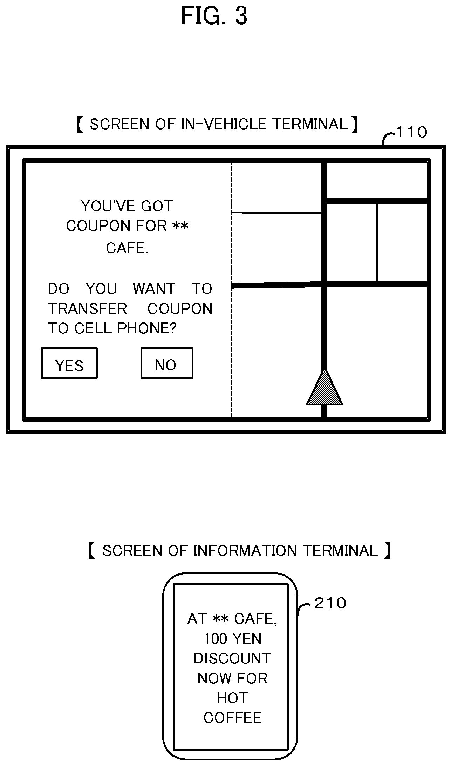

FIG. 3 is a diagram for illustrating an example of respective pieces of screen information to be displayed on the in-vehicle terminal 100 and the information terminal 200. As described later, in the information transfer system 1000 according to the first embodiment, information notified in the in-vehicle terminal 100 can be transferred to the information terminal 200 in a predetermined case. As illustrated in a screen example 110, when the user issues an instruction to transfer information in response to a notification "You've got coupon for ** Cafe. Do you want to transfer coupon to cell phone?", the information on the coupon is transferred to the information terminal 200 and displayed thereon. As a result, a notification "At ** Cafe, 100 yen discount now for hot coffee" is displayed on the information terminal 200.

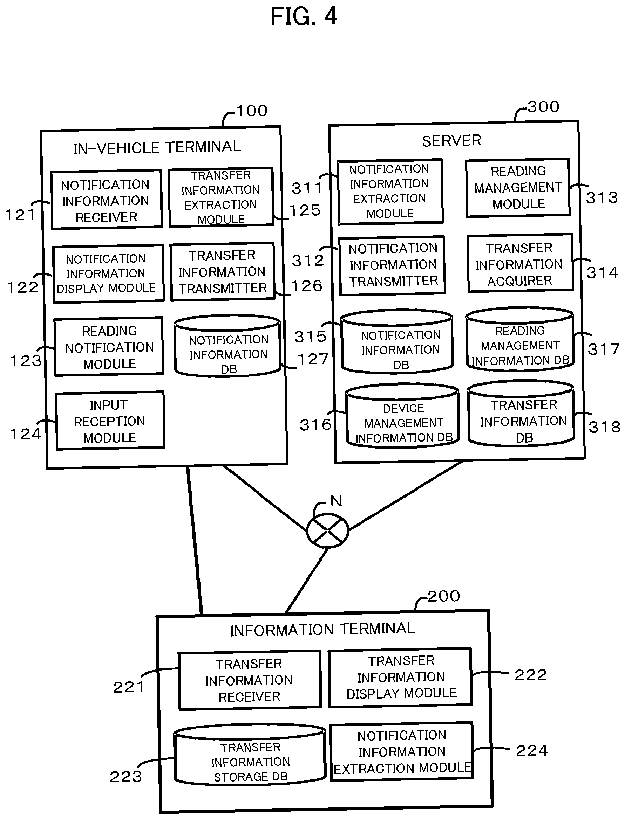

FIG. 4 is a functional block diagram for illustrating an example of functional configurations of the in-vehicle terminal 100, the information terminal 200, and the server 300. Thein-vehicle terminal 100 includes a notification information receiver 121, a notification information display module 122, a reading notification module 123, an input reception module 124, a transfer information extraction module 125, a transfer information transmitter 126, and a notification information database (DB) 127.

The notification information receiver 121 is a functional unit configured to receive notification information from the server 300. Specifically, the notification information receiver 121 acquires notification information from the server 300 at a predetermined timing (for example, when push notification is received from the server 300). The notification information received by the notification information receiver 121 is stored into the notification information DB 127 by a predetermined functional module (not shown).

The notification information display module 122 is a functional module configured to display notification information on the display device 105. Specifically, the notification information display module 122 acquires notification information stored in the notification information DB 127 and displays the notification information on the display device 105.

The reading notification module 123 is a functional module configured to notify the server 300 of notification information displayed on the display device 105 as read information. The read information may be notification information itself acquired from the server 300, or may be identification information allowing identification of notification information stored in the notification information DB of the server 300.

The input reception module 124 is a functional module configured to receive various inputs of instruction from the user via the input device 104, for example, the touch panel.

The transfer information extraction module 125 is a functional module configured to extract from the notification information DB 127 transfer information to be transferred to the information terminal 200. The transfer information includes notification information that has not been displayed on the display device 105 and has not been notified yet (not read yet), and information on the vicinity of a destination when the destination is set. Further, the transfer information may be information that the user issues an instruction to transfer in response to the displayed notification information. Further, the transfer information may be information having a category specified by the user, or may be information within a validity period, for example, a coupon. Further, the transfer information may be information on the vicinity of a route through which the vehicle has passed until now and information on the vicinity of a route that has not been notified until now.

The transfer information may be notification information itself acquired from the server 300, or may be identification information allowing identification of notification information stored in the notification information DB of the server 300.

The transfer information transmitter 126 is a functional unit configured to transmit to the server 300 transfer information extracted by the transfer information extraction module 125.

The notification information DB 127 is a database for storing notification information received from the server 300.

The server 300 includes a notification information extraction module 311, a notification information transmitter 312, a reading management module 313, a transfer information acquirer 314, a notification information DB 315, a device management information DB 316, a reading management information DB 317, and a transfer information DB 318.

The notification information extraction module 311 is a functional module configured to extract from the notification information DB 315 notification information to be displayed on the in-vehicle terminal 100. For example, the notification information extraction module 311 acquires from a predetermined functional module of the in-vehicle terminal 100 positional information on the vehicle on which the in-vehicle terminal 100 is mounted, and extracts from the notification information DB 315 notification information on the vicinity of the vehicle position. Further, the notification information extraction module 311 transmits the extracted notification information to the in-vehicle terminal 100 via the notification information transmission module 312. Further, in response to a request from the information terminal 200, the notification information extraction module 311 extracts transfer information stored in the transfer information DB 318, and transmits the transfer information to the information terminal 200 via the notification information transmitter 312.

The notification information transmitter 312 is a functional unit configured to notify, by push notification, the notification information extracted by the notification information extraction module 311 to the in-vehicle terminal 100.

The reading management module 313 is a functional module configured to receive read information from the in-vehicle terminal 100 and store the read information into the reading management information DB 317.

The transfer information acquirer 314 is a functional unit configured to acquire transfer information from the in-vehicle terminal 100. The transfer information acquired by the transfer information acquirer 314 is stored into the transfer information DB 318 by a predetermined functional module (not shown).

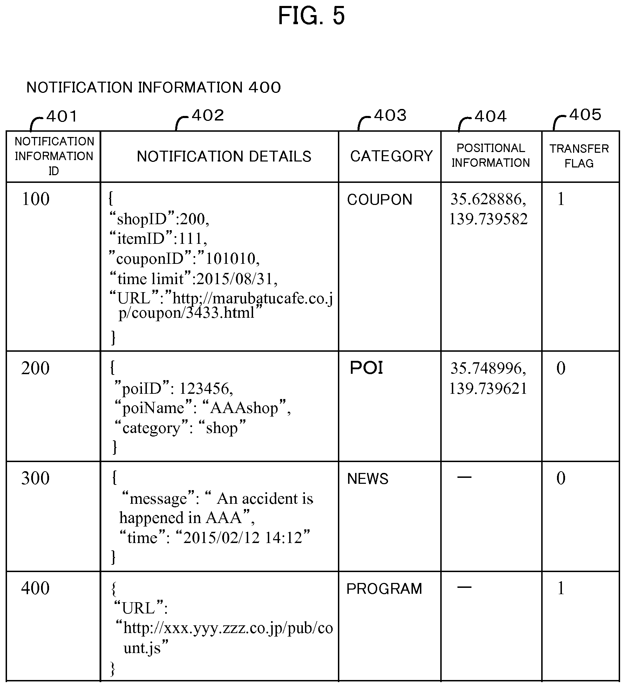

The notification information DB 315 is a database for storing notification information to be displayed on the in-vehicle terminal 100. FIG. 5 is a table for showing an example of notification information 400. The notification information 400 is information to be displayed on the in-vehicle terminal 100 and the information terminal 200. The notification information 400 includes records in each of which a notification information ID 401, notification details 402, a category 403, positional information 404, and a transfer flag 405 are associated with one another.

The notification information ID 401 is identification information for uniquely identifying the notification information 400. The notification details 402 are information indicating specific details of a notification to be displayed on the in-vehicle terminal 100 or the information terminal 200. The category 403 is information specifying a category of the notification information 400. The positional information 404 is information indicating a position relating to the notification information 400. The transfer flag 405 is information to be assigned when the notification information 400 is identified as transfer information as described later. When the notification information 400 is not identified as the transfer information, "0" is stored as the transfer flag 405, whereas when the notification information 400 is identified as the transfer information, "1" is stored as the transfer flag 405. As described later, to the transfer flag 405, information indicating that the transfer flag 405 is a transfer flag assigned when a transfer instruction is received from the user (hereinafter referred to as "user transfer instruction flag") may be added.

The device management information DB 316 is a database for storing information in which each vehicle on which the in-vehicle terminal 100 is mounted and the information terminal 200 are associated with each other.

The reading management information DB 317 is a database for storing the read notification information 400 displayed on the in-vehicle terminal 100 as read information.

The transfer information DB 418 isadatabase for storing transfer information acquired from the in-vehicle terminal 100.

The information terminal 200 includes a transfer information receiver 221, a transfer information display module 222, a transfer information storage DB 223, and a notification information extraction module 224.

The transfer information receiver 221 is a functional unit configured to receive transfer information from the server 300.

The transfer information display module 222 is a functional module configured to acquire transfer information from the server 300 and display the transfer information on the display device. For example, in response to an instruction from the user, the transfer information display module 222 issues a request to acquire transfer information to the server 300, and stores the transfer information acquired from the server 300 into the transfer information storage DB 223. Further, the transfer information display module 222 extracts transfer information from the transfer information storage DB 223 and displays the transfer information on the display device 205. A timing when the transfer information display module 222 receives transfer information from the server 300 is not limited to a timing when an instruction from the user is received, and transfer information may be acquired in advance from the server 300 through use of an idle time of the information terminal 200 and stored into the transfer information storage DB 223 so that the transfer information is displayed in response to the user's request to display the transfer information.

The transfer information storage DB 223 is a database for storing the transfer information acquired from the server 300. The notification information extraction module 224 is a functional module configured to extract notification information to be displayed on the in-vehicle terminal 100 and transmit the notification information to the in-vehicle terminal 100. For example, when the information terminal 200 receives an email or an incoming call, the notification information extraction module 224 transmits such information to the in-vehicle terminal 100 as notification information. Further, when the information terminal 200 has information similar to the above-mentioned information stored in the notification information DB 315, the notification information extraction module 224 extracts the notification information and transmits the notification information to the in-vehicle terminal 100 at a predetermined timing.

The notification information display module 122, the reading notification module 123, the input reception module 124, and the transfer information extraction module 125 of the in-vehicle terminal 100, the transfer information display module 222 of the information terminal 200, and the notification information extraction module 311 and the reading management module 313 of the server 300 are each implemented by a program for causing a corresponding one of the CPU 101, the CPU 201, and the CPU 301 to perform processing. Each of the programs is stored in the ROM 103 or the auxiliary storage device 107, the ROM 203 or the auxiliary storage device 206, or the ROM 303 or the auxiliary storage device 306, loaded onto a corresponding one of the RAM 102, the RAM 202, and the RAM 302 for its execution, and executed by the corresponding one of the CPU 101, the CPU 201, and the CPU 301.

The notification information receiver 121 and the transfer information transmitter 126 of the in-vehicle terminal 100 are implemented by the communication device 108. Further, the notification information DB 127 of the in-vehicle terminal 100 is implemented by the RAM 102, the ROM 103, and the auxiliary storage device 107.

The transfer information receiver 221 of the information terminal 200 is implemented by the communication device 207. Further, the transfer information storage DB 223 of the information terminal 200 is implemented by the RAM 202, the ROM 203, and the auxiliary storage device 206.

The notification information transmitter 312 and the transfer information acquirer 314 of the server 300 are implemented by the communication device 307. Further, the notification information DB 315, the device management information DB 316, the reading management information DB 317, and the transfer information DB 318 of the server 300 are implemented by the RAM 302, the ROM 303, and the auxiliary storage device 306.

Further, the functional blocks of the in-vehicle terminal 100, the information terminal 200, and the server 300 are obtained by classifying the functions implemented in the first embodiment in accordance with their main processing details in order to facilitate understanding of the functions, and the present invention is not limited by how the functions are classified and the names thereof. Further, the components of each of the in-vehicle terminal 100, the information terminal 200, and the server 300 may also be classified into a larger number of components in accordance with their processing details. Further, the components can also be classified such that one component executes more processing.

### [Description of Operation]

Next, a description is given of an operation of the information transfer system 1000 according to the first embodiment.

The server 300 transmits the notification information 400 to the in-vehicle terminal 100 at a predetermined timing. For example, the notification information extraction module 311 of the server 300 acquires from a predetermined function module of the in-vehicle terminal 100 positional information on the vehicle on which the in-vehicle terminal 100 is mounted, and extracts from the notification information DB 315 information on the vicinity of the vehicle position (for example, a point of interest (POI), a coupon, or news) as the notification information 400. Further, the notification information extraction module 311 transmits the extracted notification information 400 to the in-vehicle terminal 100 via the notification information transmitter 312.

The notification information receiver 121 of the in-vehicle terminal 100 receives the notification information 400 from the server 300. Further, in the in-vehicle terminal 100, the predetermined functional module (not shown) stores the received notification information 400 into the notification information DB 127.

Further, the notification information display module 122 of the in-vehicle terminal 100 acquires the notification information 400 from the notification information DB 127 at a predetermined timing (for example, in a case where the notification information 400 is news, immediately after the notification information 400 is received, or in a case where the notification information 400 is a coupon, when the vehicle position is within a predetermined distance from the relevant shop), and displays the notification information 400 on the display device 105.

Further, the notification information 400 notified to the user on the in-vehicle terminal 100 is managed by the server 300 as read information. Specifically, the reading notification module 123 of the in-vehicle terminal 100 transmits the notification information 400 that has been displayed by the notification information display module 122 to the server 300 as the read information. The reading management module 313 of the server 300 stores the read information acquired from the in-vehicle terminal 100 into the reading management information DB 317.

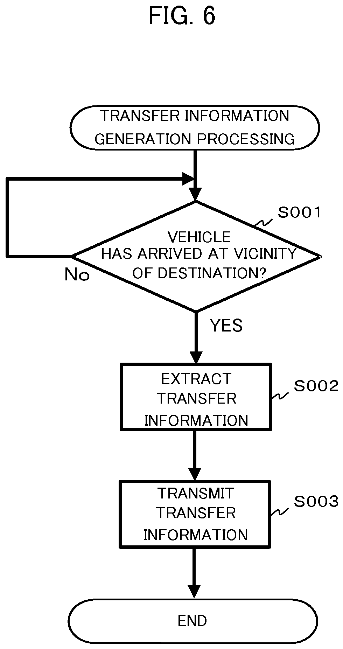

Next, a description is given of transfer information generation processing. FIG. 6 is a flowchart for illustrating an example of transfer information generation processing to be executed when a destination is set on the in-vehicle terminal 100. The transfer information generation processing is started at the same time as when the in-vehicle terminal 100 is activated.

When the transfer information generation processing is started, the transfer information extraction module 125 of the in-vehicle terminal 100 determines whether or not the vehicle has arrived at the vicinity of the destination (Step S001). Specifically, the transfer information extraction module 125 compares the destination set on the in-vehicle terminal 100 with a position on a map identified by the positioning sensor 106 to determine whether or not the vehicle position is within a predetermined distance (for example, within 1 km) from the destination. When it is determined that the vehicle is not in the vicinity of the destination (No in Step S001), the transfer information extraction module 125 repeatedly executes the processing of Step S001. Meanwhile, when it is determined that the vehicle is in the vicinity of the destination (Yes in Step S001), the transfer information extraction module 125 extracts transfer information (Step S002).

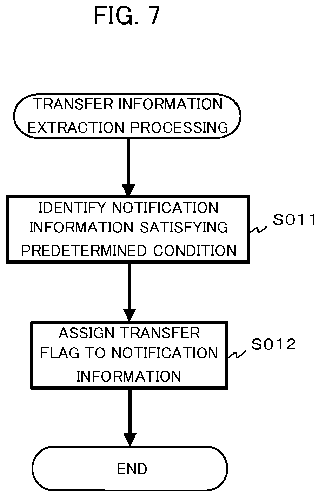

FIG. 7 is a flowchart for illustrating an example of transfer information extraction processing. The transfer information extraction processing corresponds to the processing in Step S002 of FIG. 6. When the processing is started, the transfer information extraction module 125 identifies the notification information 400 satisfying a predetermined condition from the notification information DB 127 (Step S011). Specifically, the transfer information extraction module 125 identifies from the notification information DB 127 the notification information 400 satisfying at least one of the following conditions, for example: the notification information 400 that is not displayed on the display device 105 and has not been notified yet (not read yet), information on the vicinity of a destination in a case where the destination is set, information having a category specified by the user, information on a coupon within a validity period, information on the vicinity of a route through which the vehicle has passed until now, and information on the vicinity of a route that has not been notified until now.

Further, the transfer information extraction module 125 assigns a transfer flag to the identified notification information 400 (Step S012). Further, the transfer information extraction module 125 extracts the notification information 400 assigned with the transfer flag from the notification information DB 127 as transfer information, and ends the processing of this flow.

Referring back to FIG. 6, the description is given. The transfer information extraction module 125 transmits the extracted transfer information to the server 300 via the transfer information transmitter 126 (Step S003), and ends the processing of this flow.

When the transfer information is acquired from the in-vehicle terminal 100, the transfer information acquirer 314 of the server 300 stores the transfer information into the transfer information DB 318.

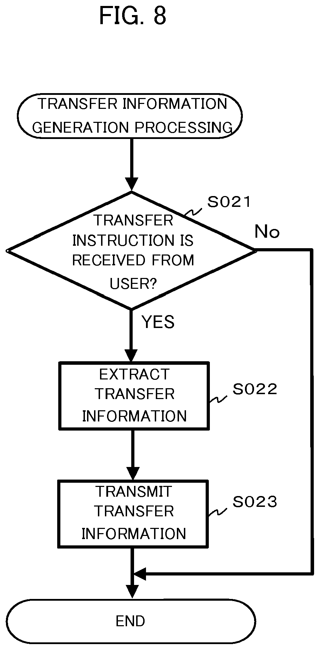

Next, a description is given of transfer information extraction processing to be executed when the transfer instruction is received from the user. FIG. 8 is a flowchart for illustrating an example of the transfer information generation processing to be executed in this case. This flow is started when a dialog for inquiring from the user whether or not to transfer, as transfer information, the notification information 400 displayed by the notification information display module 122 to the information terminal 200 as illustrated in FIG. 3. Information on a screen containing the dialog is generated by the notification information display module 122.

When the transfer information extraction processing is started, the transfer information extraction module 125 determines whether or not the transfer instruction is received from the user via the input reception module 124 (Step S021). When input of an instruction not to transfer the notification information is received from the user (No in Step S021), the transfer information extraction module 125 ends the processing of this flow.

Meanwhile, when input of an instruction to transfer the notification information 400 to the information terminal 200 is received from the user (Yes in Step S021), the transfer information extraction module 125 extracts the transfer information (Step S022) . Specifically, the transfer information extraction module 125 assigns a flag (user transfer instruction flag) indicating that the transfer instruction is received from the user to the notification information 400 for which the transfer instruction is received, and at a predetermined timing (for example, when a processing load on the in-vehicle terminal 100 is low, at a time specified by the user, or when the vehicle arrives at the vicinity of a destination when the destination is set), extracts the notification information 400 assigned with the transfer flag from the notification information DB 127 as the transfer information. Instead of displaying a dialog for inquiring from the user the intention to transfer the notification information 400, the user's intention may be confirmed by speech recognition. For example, the in-vehicle terminal 100 includes a speech recognition module (not shown), and the speech recognition module outputs, via a speaker (not shown) of the in-vehicle terminal 100, sound information for inquiring from the user whether or not to transfer the notification information 400 to the information terminal 200 as the transfer information. Further, the speech recognition module acquires a user's utterance indicating a user's intention via a microphone (not shown) of the in-vehicle terminal 100, and performs speech recognition processing on the utterance. Further, the speech recognition module determines whether or not the transfer instruction is received from the user as a result of the speech recognition (StepS021) . Further, instead of such a method of confirming the user's intention to transfer the notification information, for example, when the user gives an utterance indicating an affirmative reply (for example, "OK") to the displayed information under a state in which the notification information 400 is displayed, the speech recognition module may detect the utterance to determine that the transfer instruction is received from the user (Yes in Step S021).

Further, the transfer information extraction module 125 transmits the extracted transfer information to the server 300 via the transfer information transmitter 126 (Step S023), and ends the processing of this flow. When the transfer information is acquired from the in-vehicle terminal 100, the transfer information acquirer 314 of the server 300 stores the transfer information into the transfer information DB 318.

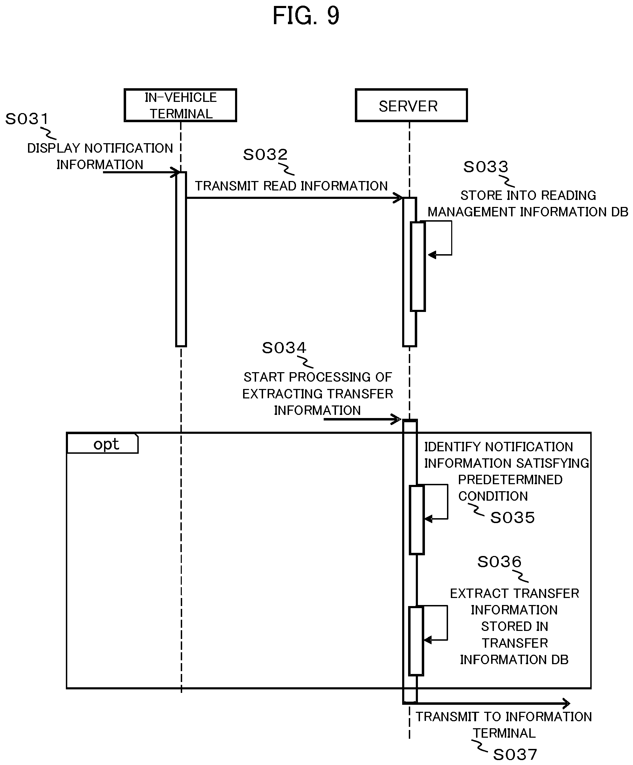

FIG. 9 is a sequence diagram for illustrating an example of transfer information generation processing to be executed when a destination is not set. As described above, when the notification information 400 is displayed by the notification information display module 122 (Step S031), the reading notification module 123 of the in-vehicle terminal 100 transmits the notification information 400 to the server 300 as read information (Step S032).

When the read information is acquired, the reading management module 313 of the server 300 stores the read information into the reading management information DB 317 (Step S033).

When a request to acquire the transfer information is received from the information terminal 200, or every time a predetermined period of time (for example, 60 minutes) has passed, the notification information extraction module 311 of the server 300 starts transfer information extraction processing (Step S034) . When the processing is started, the notification information extraction module 311 extracts the notification information 400 satisfying a predetermined condition from the notification information DB 315 (Step S035). Specifically, the notification information extraction module 311 extracts from the notification information DB 315, of pieces of notification information 400 stored in the notification information DB 315, notification information satisfying the predetermined condition, such as the notification information 400 that is not stored in the reading management information DB 317, information having a category specified by the user, and information on a coupon within a validity period, and sets the extracted notification information as the transfer information.

Further, the notification information extraction module 311 extracts the transfer information stored in the transfer information DB 318 (Step S036). Further, the notification information transmitter 312 transmits the extracted transfer information to the information terminal 200 (Step S037).

When the transfer information is received from the server 300, the transfer information receiver 221 of the information terminal 200 stores the transfer information into the transfer information storage DB 223. Further, for example, in response to an instruction from the user, the transfer information display module 222 acquires the transfer information from the transfer information storage DB 223, and displays the transfer information on the display device 205. The transfer information display module 222 inquires, via the transfer information receiver 221, from the reading management module 313 the latest read information immediately before the transfer information is displayed. Further, the transfer information display module 222 compares the latest read information immediately before the transfer information is displayed with the transfer information stored in the transfer information storage DB 223, and excludes overlapping information (note that, the information to be excluded is limited to information that is not assigned with the user transfer instruction flag) from the information to be displayed.

Such processing is executed in consideration of a time lag caused by the fact that transfer information is generated by the server 300 regularly (or when the user requests the information terminal 200 to display transfer information) and the transfer information is transmitted to the information terminal 200 at this timing. In other words, when notification information 400 that is generated as transfer information because the notification information 400 has not been read yet before the notification information 400 is displayed on the in-vehicle terminal 100 to be read is read on the in-vehicle terminal 100 after that, the notification information 400 that has already been displayed on the in-vehicle terminal 100 and for which the transfer instruction is not received from the user is displayed again on the information terminal 200. With the above-mentioned processing, it is possible to prevent the notification information 400 that has already been displayed on the in-vehicle terminal 100 from being displayed on the information terminal 200 again. In addition, the transfer information assigned with the user transfer instruction flag is excluded from the above-mentioned processing, and hence the notification information 400 that is transferred in response to the user's instruction is displayed on the information terminal 200.

The information transfer system 1000 described above can execute any one of the transfer information generation processing procedures illustrated in FIG. 6, FIG. 8, and FIG. 9, but may execute in parallel the transfer information generation processing to be executed when a destination is set (FIG. 6) and the transfer information generation processing to be executed when the user's transfer instruction is received (FIG. 8) . Further, the information transfer system 1000 may also execute in parallel the transfer information generation processing to be executed when a destination is not set and the transfer information generation processing to be executed when the user's transfer instruction is received.

In the above, a description is given of the processing to be executed in the information transfer system 1000 according to the first embodiment. With the information transfer system 1000 described above, it is possible to transfer information from a device to which the information is temporarily provided to another more suitable device as required. With this, it is possible to continue usage of a service or content comfortably on the device to which the information is transferred. In particular, regarding the notification information 400 that is transmitted from the server 300 to the in-vehicle terminal 100, the notification information 400 satisfying a predetermined condition, such as the notification information 400 that failed to be notified to the user and information specified by the user, can be transferred to the information terminal 200. Accordingly, the user can confirm the notification information 400 on the information terminal 200.

In addition, with the information transfer system 1000, it is possible to prevent omission or redundant display of the transfer information, which is caused by a difference (time lag) between a timing when notification information is notified to the user on the in-vehicle terminal 100 and a timing when notification information is displayed on the information terminal 200 as transfer information.

### <Second Embodiment>

In the information transfer system 1000 according to the first embodiment described above, the transfer information is transferred from the in-vehicle terminal 100 to the information terminal 200 via the server 300, whereas an information transfer system 1000 according to a second embodiment of the present invention employs a mode in which the transfer information is directly transferred from the in-vehicle terminal 100 to the information terminal 200.

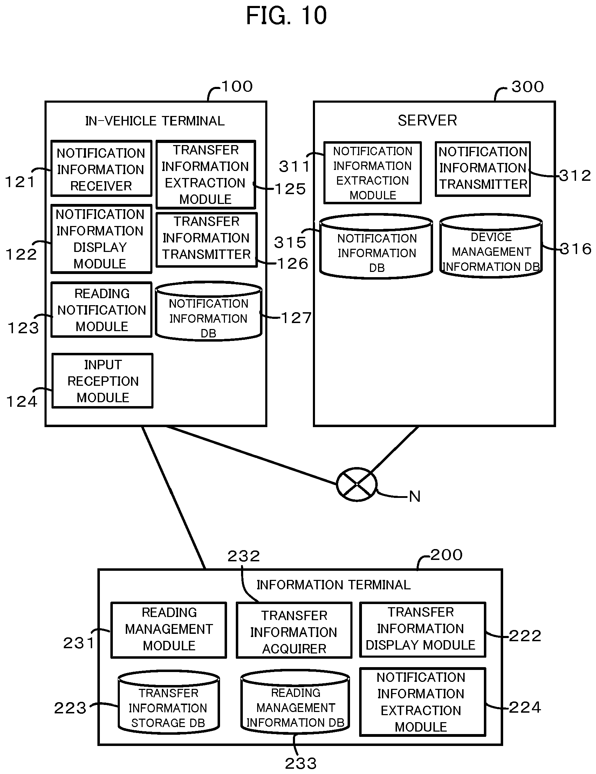

FIG. 10 is a functional block diagram for illustrating an example of a functional configuration of the information transfer system 1000 according to the second embodiment. The second embodiment differs from the first embodiment in that the information terminal 200 includes a reading management module 231, a transfer information acquirer 232, and a reading management information DB 233. Those functional modules and database are the same as those of the server 300 in the first embodiment described above, and hence a description thereof is omitted. Further, the functional configuration of the in-vehicle terminal 100 is the same as that of the first embodiment.

Now, a description is given of an operation of the information transfer system 1000 according to the second embodiment. A description of the same processing as that described in the first embodiment is omitted.

When read information is acquired from the in-vehicle terminal 100, the reading management module 231 of the information terminal 200 stores the read information into the reading management information DB 233. Further, when transfer information is acquired from the in-vehicle terminal 100, the transfer information acquirer 232 of the information terminal 200 stores the transfer information into the transfer information storage DB 223.

In the transfer information generation processing to be executed when a destination is set (FIG. 6), the transfer information transmitter 126 of the in-vehicle terminal 100 transmits the transfer information to the information terminal 200 (Step S003) . When the transfer information is acquired, the transfer information acquirer 232 of the information terminal 200 stores the transfer information into the transfer information storage DB 223.

In the transfer information generation processing to be executed when the instruction to transfer information is received from the user (FIG. 8), the transfer information transmitter 126 of the in-vehicle terminal 100 transmits the transfer information to the information terminal 200 (Step S023). When the transfer information is acquired, the transfer information acquirer 232 of the information terminal 200 stores the transfer information into the transfer information storage DB 223.

In the transfer information generation processing to be executed when a destination is not set (FIG. 9), the in-vehicle terminal 100 transmits the read information to the information terminal 200 (Step S032) . When the read information is acquired, the reading management module 231 of the information terminal 200 stores the read information into the reading management information DB 233 (Step S033).

For example, when a request to display the transfer information is received from the user, the transfer information display module 222 of the information terminal 200 starts the transfer information extraction processing (StepS034). When the processing is started, the transfer information display module 222 refers to the notification information DB 127 of the in-vehicle terminal 100, and identifies the notification information 400 satisfying a predetermined condition from the notification information DB 127 (Step S035) . Specifically, the transfer information display module 222 identifies and extracts from the notification information DB 127, of pieces of notification information 400 stored in the notification information DB 127 of the in-vehicle terminal 100, the notification information 400 satisfying the predetermined condition, such as the notification information 400 that is not stored in the reading management information DB 233 of the information terminal 200, information having a category specified by the user, and information on a coupon within a validity period, and stores the extracted notification information into the transfer information storage DB 223 as the transfer information.

Further, the transfer information display module 222 extracts the transfer information stored in the transfer information storage DB 223 (S036) . Further, the transfer information display module 222 displays the extracted transfer information on the display device 205.

In the above, a description is given of the processing to be executed in the information transfer system 1000 according to the second embodiment. With the information transfer system 1000 described above, it is possible to transfer information from a device to which the information is temporarily provided to another more suitable device as required. With this, it is possible to continue usage of a service or content comfortably on the device to which the information is transferred. In particular, regarding the notification information 400 that is transmitted from the server 300 to the in-vehicle terminal 100, the notification information 400 satisfying a predetermined condition, such as the notification information 400 that failed to be notified to the user and information specified by the user, can be transferred to the information terminal 200. Accordingly, the user can confirm the notification information 400 on the information terminal 200.

Further, in the information transfer system 100, the in-vehicle terminal 100 can transmit the transfer information to the information terminal 200 without the intermediation of the server 300. As a result, even when the in-vehicle terminal 100 or the information terminal 200 is not connected to a communication network, for example, the Internet, the transfer information can be transferred to the information terminal 200.

### <Third Embodiment>

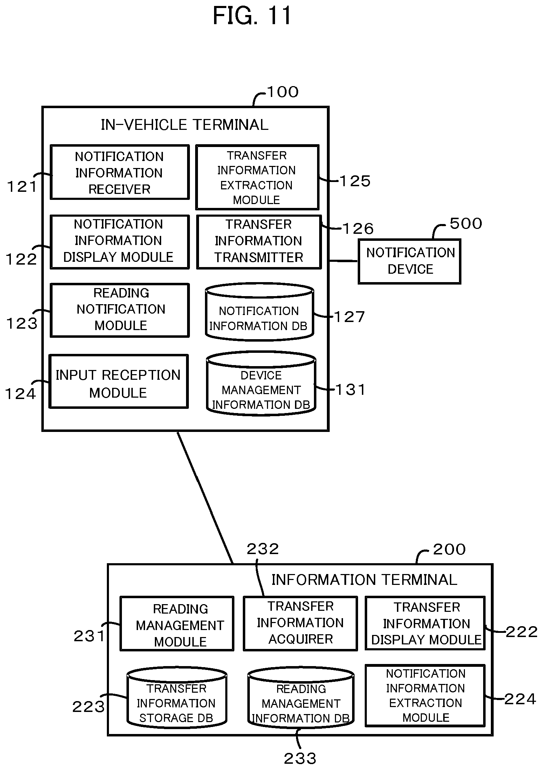

FIG. 11 is a functional block diagram for illustrating an example of a functional a third embodiment of the present invention. In the information transfer system 1000 according to the second embodiment described above, the server 300 transmits the notification information 400 to the in-vehicle terminal 100, but the information transfer system 1000 according to the third embodiment differs from that of the second embodiment in that a notification device 500, which is directly connected to the in-vehicle terminal 100 (for example, connected by cable), transmits the notification information 400 to the in-vehicle terminal 100. The notification device 500 is, for example, an engine control unit (ECU) or a central gateway.

Further, the information transfer system 1000 according to the third embodiment differs from that of the first embodiment in that the in-vehicle terminal 100 includes a device management information DB 131, but remaining functional configurations of the in-vehicle terminal 100 and the information terminal 200 are the same as those of the second embodiment, and hence a description thereof is omitted.

With the information transfer system 1000 described above, it is possible to transfer information from a device to which the information is temporarily provided to another more suitable device as required. With this, it is possible to continue usage of a service or content comfortably on the device to which the information is transferred. In particular, in the information transfer system 1000 according to the third embodiment, the notification information 400 from a device other than the server 300 is transmitted to the in-vehicle terminal 100, which eliminates the necessity of the server 300.

### <Fourth Embodiment>

In the first embodiment, information satisfying a predetermined condition, for example, unread notification information 400, is transmitted to the information terminal 200 as transfer information, whereas an information transfer system 1000 according to a fourth embodiment of the present invention relates to processing of updating, for example, a vehicle ECU, map information, and a program for the in-vehicle terminal 100 through use of over-the-air (OTA), and information for obtaining from the user acceptance of update processing is transferred from the in-vehicle terminal 100 to the information terminal 200 as the transfer information. As a result, processing of updating, for example, an update program relating to the in-vehicle terminal 100 can be performed from the information terminal 200.

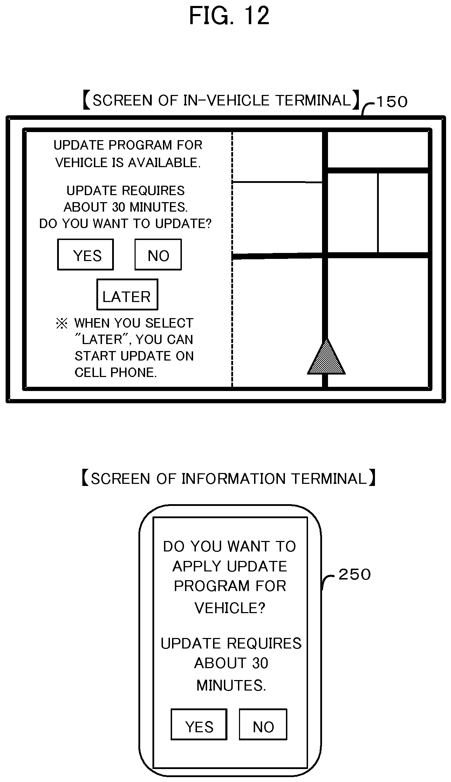

FIG. 12 is a diagram for illustrating a screen example 150 of the in-vehicle terminal 100 on which information for obtaining from the user acceptance of update processing for an update program for the vehicle is displayed and a screen example 250 of the information terminal 200 on which the information is transferred from the in-vehicle terminal 100. As illustrated in FIG. 12, on the in-vehicle terminal 100, a dialog for obtaining acceptance of update processing from the user in the execution of the update program is displayed. In FIG. 12, when the user selects "later", information for obtaining acceptance from the user is transferred from the in-vehicle terminal 100 to the information terminal 200. On the information terminal 200, the transferred information is displayed as illustrated in the screen example 250.

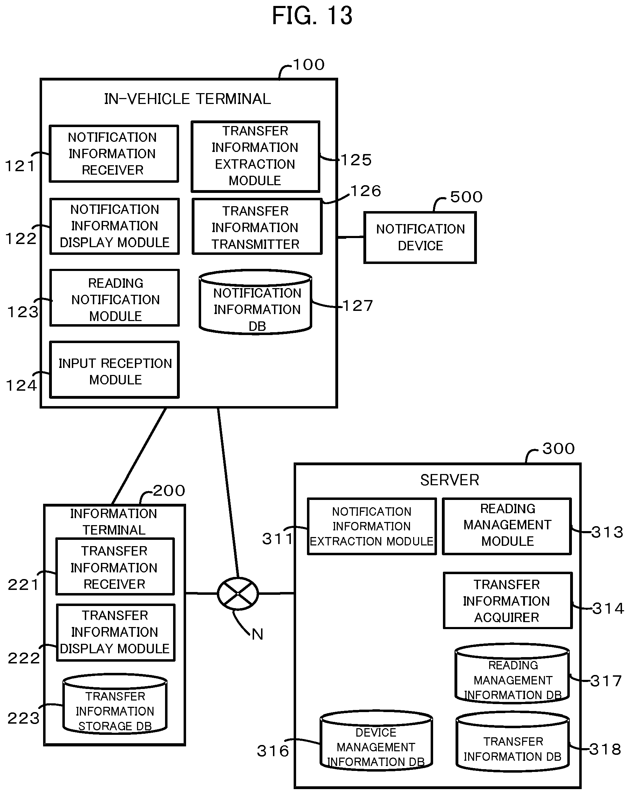

FIG. 13 is a functional block diagram for illustrating an example of functional configurations of the in-vehicle terminal 100, the information terminal 200, and the server 300 in the fourth embodiment. The in-vehicle terminal 100 differs from that of the first embodiment in that the in-vehicle terminal 100 acquires the notification information 400 from the notification device 500. The notification device 500 is, for example, an ECU or a central gateway.

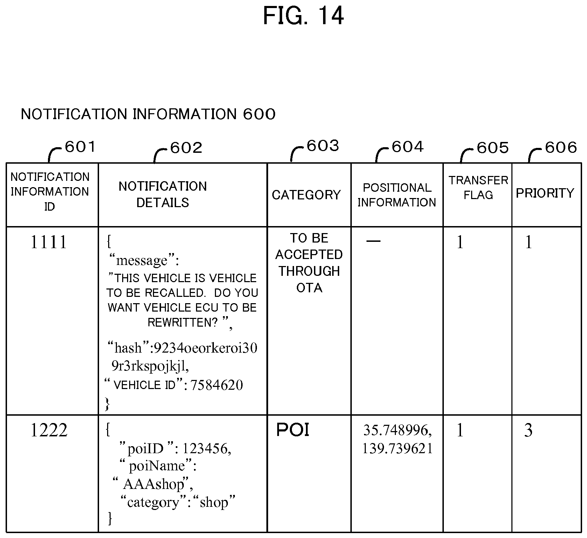

FIG. 14 is a table for showing an example of notification information 600 in the fourth embodiment. The notification information 600 includes records in each of which a notification information ID 601, notification details 602, a category 603, positional information 604, a transfer flag 605, and a priority 606 are associated with one another. The items other than the priority 606 are the same as those of the first embodiment, and hence a description thereof is omitted.

The priority 606 is information indicating a priority of the notification information 600 to be displayed by the notification information display module 122 of the in-vehicle terminal 100. Inthisexample, information with the highest priority is indicated by "1". In other words, the priority 606 indicates that notification information 600 having a notification information ID "1111" is displayed in preference to notification information 600 having a notification information ID "1222", and is displayed prior to the latter notification information 600. Such display is performed in order to reflect importance of the update program for the vehicle or the like.

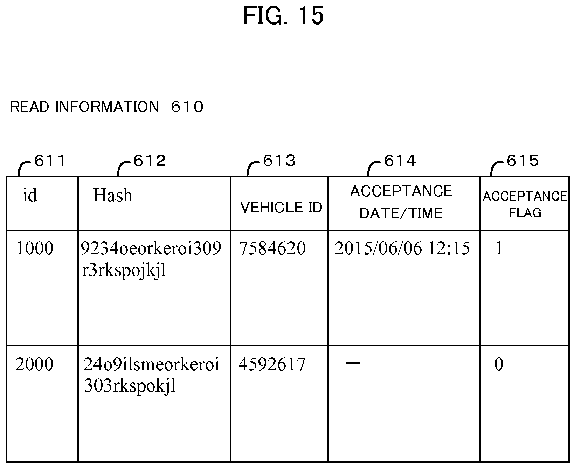

FIG. 15 is a table for showing an example of read information 610 in the fourth embodiment. The read information 610 includes records in each of which an id 611, a hash 612, a vehicle ID 613, an acceptance date/time 614, and an acceptance flag 615 are associated with one another.

The id 611 is identification information for identifying the read information 610. The hash 612 is a hash value for determining whether or not acceptance is valid. The hash value is generated in advance by the server 300, and is notified to the in-vehicle terminal 100 at the same time when the notification device 500 issues a notification request to the in-vehicle terminal 100. The notified hash value is then used to verify the validity on the in-vehicle terminal 100 side. The hash value may be generated by the in-vehicle terminal 100 to enable the server 300 to verify the validity. The vehicle ID 613 is information for identifying a vehicle for which a vehicle ECU is to be updated. The vehicle ID 613 may be such an ID that allows an ECU to be updated to be retrieved based on the vehicle ID 613, or may be such an ID that allows an ECU to be updated to be determined based on the vehicle ID 613. The acceptance date/time 614 is information indicating a date and time at which the user accepted the update. The acceptance flag 615 is information indicating whether or not the user has been accepted the update processing. The acceptance flag 615 is included in the read information 600 so that, when a vehicle ECU update notification is displayed on the in-vehicle terminal 100 to obtain acceptance from the user, the acceptance can be confirmed.

Now, a description is given of an operation of the information transfer system 1000 according to the fourth embodiment. A description of the same processing as that described in the first embodiment is omitted. When the notification information receiver 121 of the in-vehicle terminal 100 receives from the notification device 500 the notification information 600 having a higher priority such as a vehicle ECU, map information, and a control program for the in-vehicle terminal 100, the notification information display module 122 displays the information on the display device 105. Further, when the input reception module 124 receives from the user an instruction to transfer update processing relating to the notification information 600 to the information terminal 200 (for example, when "later" is selected), the transfer information extraction module 125 assigns a user transfer instruction flag as a transfer flag. Further, at a predetermined timing (for example, immediately after the information is notified to the user, when a predetermined period of time has elapsed, and a processing load on the in-vehicle terminal is low), the transfer information extraction module 125 extracts the notification information 600 assigned with the user transfer instruction flag from the notification information DB 127 as transfer information, and transmits the transfer information to the information terminal 200 via the transfer information transmitter 126.

When the transfer information is received via the transfer information receiver 221, the transfer information display module 222 of the information terminal 200 stores the transfer information into the transfer information storage DB 223. Further, at a predetermined timing (for example, when the transfer information is received or when an instruction to display the transfer information is received from the user), the transfer information display module 222 displays the transfer information. The transfer information display module 222 preferentially displays transfer information with a higher priority.

In the above, a description is given of the processing to be executed in the information transfer system 1000 according to the fourth embodiment. With the information transfer system 1000 described above, it is possible to transfer information from a device to which the information is temporarily provided to another more suitable device as required. With this, it is possible to continue usage of a service or content comfortably on the device to which the information is transferred. In particular, with the information transfer system 1000 according to the fourth embodiment, the notification information 400 from a device other than the server 300 can be transferred to the information terminal 200. Further, when a vehicle ECU or the like is rewritten through the OTA, it is possible to accept the update from the information terminal 200. In addition, a proof of acceptance of the update of an ECU can be stored in the server 300.

### <Fifth Embodiment>

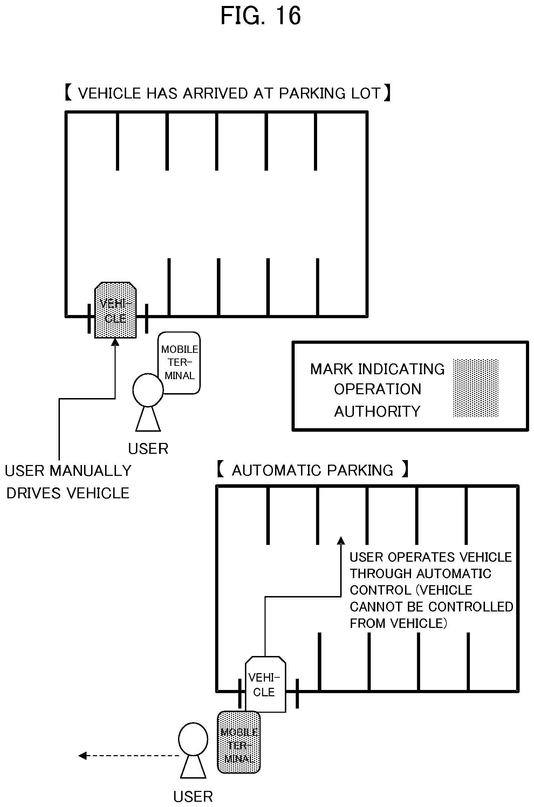

An information transfer system 1000 according to a fifth embodiment of the present invention is a system in which an authority to operate the vehicle is transferred between the in-vehicle terminal 100 and the information terminal 200 as transfer information. FIG. 16 is a diagram for illustrating a basic idea of a location of the operation authority and a vehicle operation. As illustrated in FIG. 16, when the in-vehicle terminal 100 has the authority to operate a vehicle, the user can manually drive the vehicle. Further, after the vehicle arrives at a parking lot, through transfer of the operation authority from the in-vehicle terminal 100 to the information terminal 200, the user can perform an automatic control operation, for example, automatic parking, from the information terminal 200. While the information terminal 200 has the operation authority, the user cannot manually drive the vehicle on the vehicle side. There is no limitation on a technology relating to an automatic control operation of the vehicle that uses the information terminal 200, and any known technology relating to an automatic control operation may be used.

Further, as illustrated in FIG. 16, when the information terminal 200 has the operation authority, the user uses an automatic starting function of the vehicle from the information terminal 200 to move the vehicle to a user's position. When the operation authority is transferred from the information terminal 200 to the in-vehicle terminal 100, the user can manually drive or automatically operate the vehicle. The information transfer system 1000 can also cause the information terminal 200 to execute navigation from the parking lot to the vicinity of a destination by transferring information on the vicinity of the destination from the in-vehicle terminal 100 to the information terminal 200 at the same time as when the operation authority is transferred from the in-vehicle terminal 100 to the information terminal 200.

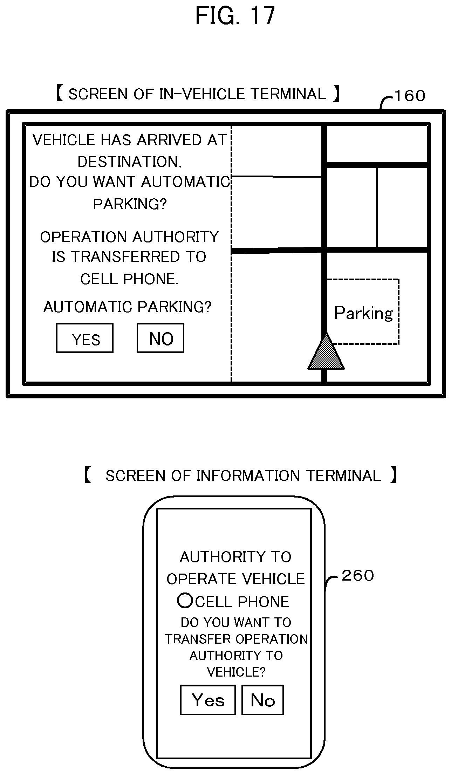

FIG. 17 is a diagram for illustrating a screen example 160 of the in-vehicle terminal 100 for receiving a user's instruction on whether or not to transfer the operation authority from the in-vehicle terminal 100 to the information terminal 200 and a screen example 260 of the information terminal 200 for receiving a user's instruction on whether or not to transfer the operation authority from the information terminal 200 to the in-vehicle terminal 100.

As illustrated in FIG. 17, on the in-vehicle terminal 100, a dialog for receiving the user's instruction on whether or not to transfer the operation authority to the information terminal 200 is displayed. In FIG. 17, when "Yes" is selected as an answer to "Automatic parking?", the authority to operate the vehicle held by the in-vehicle terminal 100 is transferred to the information terminal 200. Meanwhile, when "No" is selected as an answer to "Automatic parking?", the operation authority is not transferred to the information terminal 200, and the state in which the in-vehicle terminal 100 has the operation authority is kept. In this case, the user can, for example, park the vehicle through manual driving or automatic operation.

Further, on the screen example 260 of the information terminal 200, a dialog for receiving the user's instruction on whether or not to transfer the operation authority to the vehicle is displayed. In FIG. 17, when "Yes" is selected, the authority to operate the vehicle held by the information terminal 200 is transferred to the vehicle side. Meanwhile, when "No" is selected, the operation authority is not transferred to the in-vehicle terminal 100, and the state in which the information terminal 200 has the operation authority is kept. In this case, the user can operate the vehicle from the information terminal 200.

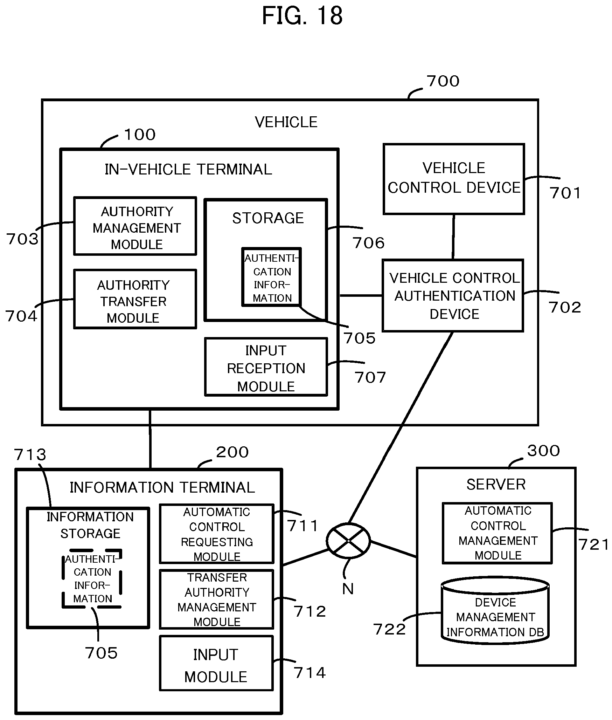

FIG. 18 is a diagram for illustrating an example of schematic configurations of a vehicle 700 including the in-vehicle terminal 100, the information terminal 200, and the server 300. The vehicle 700 includes a vehicle control device 701, a vehicle control authentication device 702, an authority management module 703 for the in-vehicle terminal 100, an authority transfer module 704, a storage 706 in which authentication information 705 is stored, and an input reception module 707.

The vehicle control device 701 is a control device configured to automatically control the vehicle, and controls the vehicle by communicating to/from an ECU and the like of the vehicle. Specifically, the vehicle control device 701 acquires, via an automatic control management module of the server 300, an automatic control request from an automatic control requesting module of the information terminal 200, and controls the vehicle based on the instruction.

The vehicle control authentication device 702 determines whether or not the operation authority is valid through use of the authentication information 705. Specifically, the vehicle control authentication device 702 determines whether or not the vehicle has a valid operation authority. When it is then determined that the vehicle has a valid operation authority, the vehicle control authentication device 702 allows a user's operation relating to manual driving or automatic operation. In this case, the vehicle control authentication device 702 inhibits automatic control from the information terminal 200. Meanwhile, when it is determined that the vehicle does not have the operation authority, the vehicle control authentication device 702 allows the vehicle control device 701 to automatically control the vehicle.

Further, the vehicle control authentication device 702 determines whether or not the information terminal 200 has a valid operation authority. Specifically, the vehicle control authentication device 702 acquires the authentication information 705 from the information terminal 200 via a functional module (not shown) of the server 300, and determines whether or not the operation authority is valid through use of the authentication information 705. When it is determined that the information terminal 200 has a valid operation authority, the vehicle control authentication device 702 allows the vehicle control device 701 to automatically control the vehicle from the information terminal 200. In this case, the vehicle control authentication device 702 inhibits the user's manual driving and instruction on automatic operation from the in-vehicle terminal 100. The vehicle control authentication device 702 is connected to a communication network, for example, the Internet, via a TCU or the information terminal 200.

When a request to acquire the authentication information 705 is received from the vehicle control authentication device 702, the authority management module 703 of the in-vehicle terminal 100 acquires the authentication information 705 from the storage 706, and transmits the authentication information 705 to the vehicle control authentication device 702. Further, when the authentication information 705 is not stored in the storage 706, the authority management module 703 outputs to the vehicle control authentication device 702 a signal indicating an error of the acquisition request.

When the authority to operate the vehicle is to be transferred from the in-vehicle terminal 100 to the information terminal 200, the authority transfer module 704 of the in-vehicle terminal 100 transmits the authentication information 705 to the information terminal 200. Specifically, the authority transfer module 704 displays, via a predetermined functional module (not shown) (for example, a display module configured to display screen information), screen information on whether or not to transfer the operation authority to the information terminal 200 at a predetermined timing (for example, when the vehicle has arrived at a destination or when an instruction to transfer the operation authority is received from the user) . Further, when the instruction to transfer the operation authority is received from the user via the input reception module 707, the authority transfer module 704 transmits the authentication information 705 to the information terminal 200.

The storage 706 stores the authentication information 705.

The input reception module 707 is configured to receive various inputs of instruction from the user via the input device 104, for example, the touch panel.

The information terminal 200 includes an automatic control requesting module 711, a transfer authority management module 712, an information storage 713, and an input module 714.

When the information terminal 200 has the operation authority, the automatic control requesting module 711 transmits an automatic control request to the vehicle control device 701 via an automatic control management module 721 of the server 300. Every time an instruction on automatic control operation is received from the user, the automatic control requesting module 711 inquires from the vehicle control authentication device 702 whether or not the information terminal 200 has the operation authority. The automatic control request may be a request to control traveling of the entire vehicle, such as automatic parking and automatic driving, or may be a request to operate various devices for operating the vehicle, such as an accelerator, a brake, and a steering device. The automatic control request may also be a request for traveling control specifying a traveling route or a traveling speed.

The transfer authority management module 712 acquires the authentication information 705 indicating the operation authority from the in-vehicle terminal 100, and stores the authentication information 705 into the information storage 713. Further, in response to a request from the automatic control requesting module 711, the transfer authority management module 712 determines whether or not the information terminal 200 has a valid operation authority. Specifically, the transfer authority management module 712 transmits, via the server 300, the authentication information 705 to the vehicle control authentication device 702 of the vehicle, and uses the determination result obtained by the vehicle control authentication device 702 to determine whether or not the information terminal 200 has a valid operation authority. When the information terminal 200 has a valid operation authority, the transfer authority management module 712 allows the automatic control requesting module 711 to transmit an automatic control request.

The information storage 713 stores the authentication information 705 acquired from the in-vehicle terminal 100.

The server 300 includes the automatic control management module 721 and a device management information DB 722.

The automatic control management module 721 receives an automatic control request from the automatic control requesting module 711 of the information terminal 200, and identifies a vehicle to be controlled based on device management information stored in the device management information DB 722. Further, the automatic control management module 721 transmits the automatic control request instruction to the vehicle control device 701 of the identified vehicle.

The device management information DB 722 stores information including a correspondence relationship between a vehicle and the information terminal 200.

Now, a description is given of an operation of the information transfer system 1000 according to the fifth embodiment.

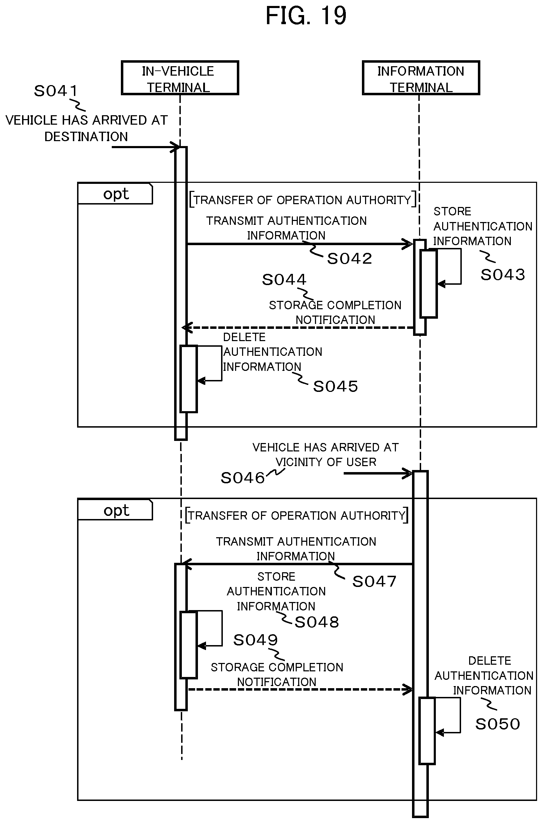

FIG. 19 is a sequence diagram for illustrating a flow of transferring the operation authority from the in-vehicle terminal 100 to the information terminal 200. As illustrated in FIG. 19, when the vehicle has arrived at a destination (Step S041), the authority transfer module 704 displays, via the predetermined functional module (not shown), for example, the display module, a dialog for inquiring from the user whether or not to transfer the operation authority to the information terminal 200. Further, when the user's instruction to transfer the operation authority is acquired via the input reception module 707, the authority transfer module 704 transmits the authentication information 705 to the transfer authority management module 712 of the information terminal 200 (Step S042).

When the authentication information 705 is acquired, the transfer authority management module 712 of the information terminal 200 stores the authentication information 705 into the information storage 713 (Step S043). Further, after the authentication information 705 is stored, the transfer authority management module 712 transmits a storage completion notification to the authority transfer module 704 of the in-vehicle terminal 100 (Step S044).

When the storage completion notification is received from the information terminal 200, the authority management module 703 of the in-vehicle terminal 100 deletes the authentication information 705 from the storage 706 (Step S045).

Further, when an instruction to start the vehicle is received from the user via the input module 714, the automatic control requesting module 711 of the information terminal 200 inquires from the transfer authority management module 712 the operation authority. When the authentication information 705 is acquired, the transfer authority management module 712 transmits the authentication information 705 to the vehicle control authentication device 702 of the vehicle, and uses the determination result obtained by the vehicle control authentication device 702 to determine whether or not the information terminal 200 has a valid authentication information 705. When it is determined that the information terminal 200 has a valid authentication information 705, the automatic control requesting module 711 is allowed to transmit an automatic control request.

When the automatic control requesting module 711 is allowed to transmit an automatic control request, the automatic control requesting module 711 transmits the automatic control request to the vehicle control device 701 of the in-vehicle terminal 100 via the automatic control management module 721 of the server 300. The vehicle control device 701 of the in-vehicle terminal 100 moves the vehicle to the vicinity of a user's position through automatic operation based on the automatic control request.

When the vehicle has arrived at the vicinity of the user (Step S046), the transfer authority management module 712 displays, via the predetermined functional module (not shown), for example, the display module, a dialog for inquiring from the user whether or not to transfer the operation authority to the in-vehicle terminal 100. Further, when the user's instruction to transfer the operation authority is acquired via the input module 714, the transfer authority management module 712 transmits the authentication information 705 to the authority transfer module 704 of the in-vehicle terminal 100 (Step S047).

When the authentication information 705 is acquired, the authority transfer module 704 of the in-vehicle terminal 100 stores the authentication information 705 into the storage 706 (Step S048) . Further, after the authentication information 705 is stored, the authority transfer module 704 transmits a storage completion notification to the transfer authority management module 712 of the information terminal 200 (Step S049).

When the storage completion notification is received from the in-vehicle terminal 100, the transfer authority management module 712 of the information terminal 200 deletes the authentication information 705 from the information storage 713 (Step S050).

In the above, the sequence diagram of FIG. 19 is described.

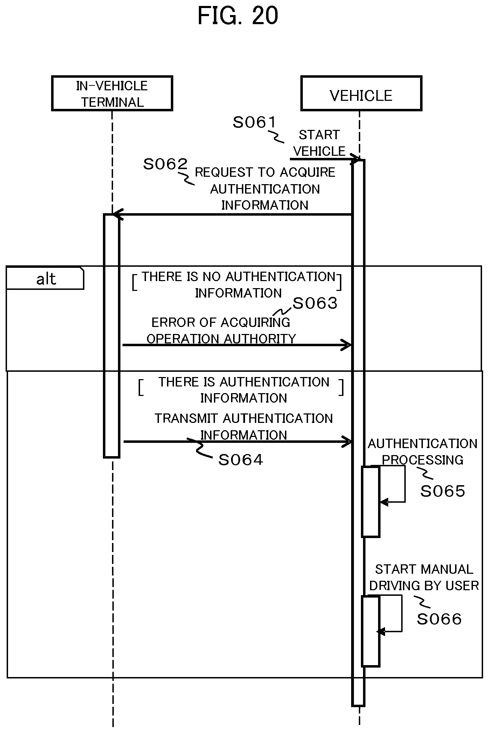

FIG. 20 is a sequence diagram for illustrating an example of processing of authenticating the authority to operate the vehicle . As illustrated in FIG. 20, when the user starts the vehicle (Step S061), the vehicle control authentication device 702 determines whether or not the vehicle has an operation authority. Specifically, the vehicle control authentication device 702 issues to the authority management module 703 a request to acquire the authentication information 705 (Step S062).

When the authentication information 705 is not stored in the storage 706, the authority management module 703 transmits a signal indicating an error of the request to acquire the operation authority to the vehicle control authentication device 702 (Step S063). In this case, the authority transfer module 704 displays, via a predetermined functional module (not shown) (for example, the display module), screen information for receiving a user's instruction on whether or not to transfer the operation authority from the information terminal 200. When the user does not transfer the operation authority to the in-vehicle terminal 100, the vehicle control device 701 may control the vehicle based on an automatic control request from the automatic control requesting module 711 of the information terminal 200.

Further, when the authentication information 705 is stored in the storage 706, the authority management module 703 transmits the authentication information 705 to the vehicle control authentication device 702 (Step S064). The vehicle control authentication device 702 performs authentication processing through use of the authentication information 705(Step S065), and when it is determined that the vehicle has a valid operation authority, allows manual driving by the user (Step S066).

In the above, the sequence diagram of FIG. 20 is described.

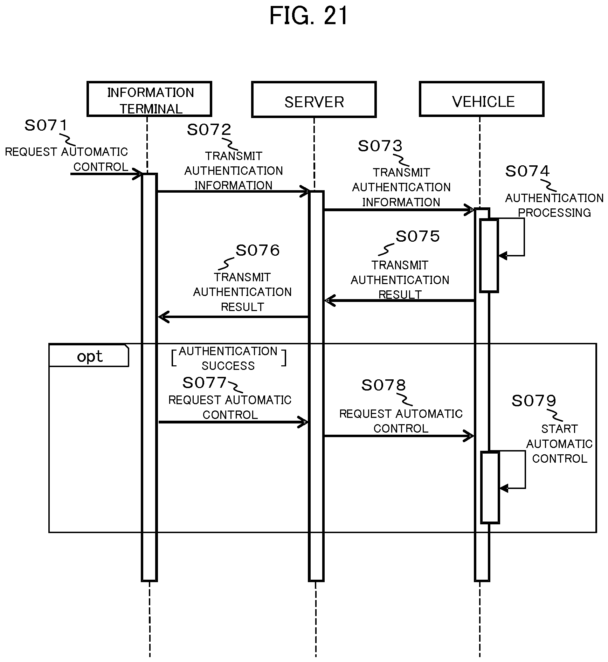

FIG. 21 is a sequence diagram for illustrating a case in which the vehicle is automatically controlled from the information terminal 200. As illustrated in FIG. 21, when the input module 714 of the information terminal 200 receives an automatic control request for the vehicle from the user (Step S071), the automatic control requesting module 711 of the information terminal 200 inquires from the transfer authority management module 712 the operation authority. The transfer authority management module 712 transmits, via the server 300, the authentication information 705 to the vehicle control authentication device 702 (Step S072 and Step S073). The vehicle control authentication device 702 performs authentication processing of determining whether or not the information terminal 200 has a valid operation authority through use of the acquired authentication information 705 (Step S074) . Further, the vehicle control authentication device 702 transmits, via the server 300, a determination result to the transfer authority management module 712 of the information terminal 200 (Step S075 and Step S076).

The transfer authority management module 712 of the information terminal 200 determines whether or not the information terminal 200 has a valid authentication information through use of the determination result obtained by the vehicle control authentication device 702. When it is determined that the information terminal 200 has a valid authentication information 705, the transfer authority management module 712 transmits, via the server 300, an automatic control request by the automatic control requesting module 711 to the vehicle control device 701 (Step S077 and Step S078). The vehicle control device 701 starts automatic control of the vehicle based on the automatic control request (Step S079) .

When the in-vehicle terminal 100 and the information terminal 200 can directly communicate to/from each other wirelessly or when the in-vehicle terminal 100 and the information terminal 200 are connected to each other by a cable, the authentication information 705 and the like may be transmitted and received via the in-vehicle terminal 100 without the intermediation of the server 300. As another example, the information terminal 200 and the vehicle control authentication device 702 may communicate to/from each other directly.

In the above, the sequence diagram of FIG. 21 is described.

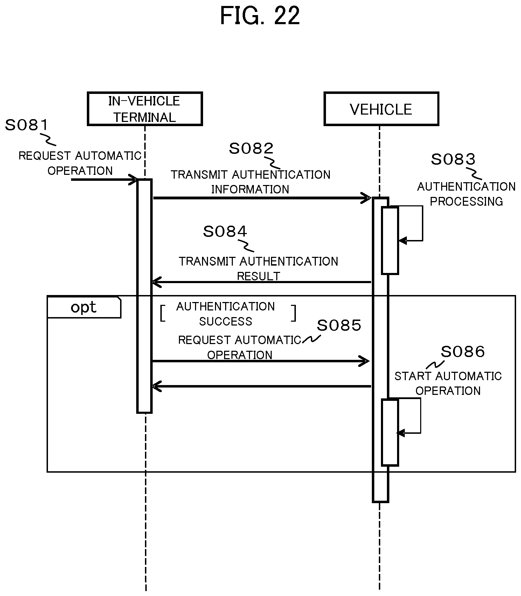

FIG. 22 is a sequence diagram for illustrating an example of a case in which the in-vehicle terminal 100 performs automatic operation under a state in which the in-vehicle terminal 100 has the operation authority. The "automatic operation" refers to execution of control of an accelerator, a brake, a steering device, and other devices not by a driver but by the vehicle control device 701. The automatic operation has the same meaning as that of automatic control of the vehicle to be executed by the information terminal 200, but in order to show the difference between the case of issuing an instruction from the vehicle side and an instruction issued by the information terminal 200, the automatic operation and the automatic control are distinguished from each other herein.

As illustrated in FIG. 22, when the input reception module 707 of the in-vehicle terminal 100 receives input of an instruction on an automatic operation request from the user (Step S081), the authority management module 703 transmits the authentication information 705 acquired from the storage 706 to the vehicle control authentication device 702 (StepS082). Further, the vehicle control authentication device 702 transmits an authentication result to the authority management module 703 (Step S083) . Further, when the authentication result indicates an authentication success, the authority management module allows the input reception module to receive user's input of instruction relating to automatic operation.

When the input of instruction relating to automatic operation (automatic operation request) is received from the user, the input reception module 707 transmits the automatic operation request to the vehicle control device 701 (Step S084). The vehicle control device 701 starts automatic operation based on the acquired automatic operation request (Step S085).

In the above, a description is given of the processing to be executed in the information transfer system 1000 according to the fifth embodiment.

With the information transfer system 1000 described above, it is possible to transfer information from a device to which the information is temporarily provided to another more suitable device as required. With this, it is possible to continue usage of a service or content comfortably on the device to which the information is transferred. In particular, in the information transfer system 1000 according to the fifth embodiment, when the information terminal 200 has the authority to operate the vehicle, the vehicle cannot be operated from the vehicle, and hence it is possible to prevent theft of the vehicle. Further, only one of the in-vehicle terminal 100 and the information terminal 200 has the operation authority. Accordingly, a state in which operation of automatic driving (automatic control or automatic operation) and operation of manual driving can be performed at the same time never occurs, and thus it is also possible to prevent an erroneous operation. Further, the operation authority can be transferred between the in-vehicle terminal 100 and the information terminal 200, and hence this operation authority can also be used as a substitute for a vehicle key.

The present invention is not limited to the embodiments described above. The present invention includes various modification examples. For example, the embodiments described above are described in detail in order to facilitate an understanding of the present invention. The present invention is not necessarily limited to the one including all of the configurations described above. Further, a part of the configurations of a given embodiment may be replaced with the configurations of another embodiment. Alternatively, the configurations of a given embodiment may be added to the configurations of another embodiment. In addition, other configurations may be added to, deleted from, or replace a part of the configurations of each embodiment.

Further, in the above description, only control lines and information lines considered to be required for description are illustrated. Not all of the control lines and information lines in a product are illustrated. In an actual product, it may be considered that almost all parts are connected to each other.

### Reference Signs List

1000 ··· information transfer system, 100 ··· in-vehicle terminal, 200 ··· information terminal, 300 ··· server, 101 ··· CPU, 102 ··· RAM, 103 ··· ROM, 104 ··· input device, 105 ··· display device, 106 ··· positioning sensor, 107 ··· auxiliary storage device, 108 ··· communication device, 201 ··· CPU, 202 ··· RAM, 203 ··· ROM, 204 ··· input device, 205 ··· display device, 206 ··· auxiliary storage device, 207 ··· communication device, 301 ··· CPU, 302 ··· RAM, 303 ··· ROM, 304 ··· input device, 305 ··· output device, 306 ··· auxiliary storage device, 307 ··· communication device, 121 ··· notification information receiver, 122 ··· notification information display module, 123 ··· reading notification module, 124 ··· input reception module, 125 ··· transfer information extraction module, 126 ··· transfer information transmitter, 127 ··· notification information DB, 221 ··· transfer information receiver, 222 ··· transfer information display module, 223 ··· transfer information storage DB, 224 ··· notification information extraction module, 311 ··· notification information extraction module, 312 ··· notification information transmitter, 313 ··· reading management module, 314 ··· transfer information acquirer, 315 ··· notification information DB, 316 ··· device management information DB, 317 ··· reading management information DB, 318 ··· transfer information DB

## Claims

1. An information transfer system, comprising:
an in-vehicle terminal;
an information terminal; and
a server,
wherein the in-vehicle terminal includes a transfer information extraction module configured to extract, as transfer information, a part of acquired notification information that is to be transferred to the information terminal,
wherein the server includes a notification information extraction module configured to transmit the transfer information acquired from the in-vehicle terminal to the information terminal at a predetermined timing, and
wherein the information terminal includes a transfer information display module configured to display the transfer information acquired from the server.

2. An information transfer system, comprising:
an in-vehicle terminal; and
an information terminal,
wherein the in-vehicle terminal includes a transfer information extraction module configured to extract, as transfer information, a part of acquired notification information that is to be transferred to the information terminal, and
wherein the information terminal includes a transfer information display module configured to display the transfer information transferred from the in-vehicle terminal.

3. An information transfer system, comprising:
an in-vehicle terminal; and
an information terminal,
wherein the in-vehicle terminal includes an authority transfer module configured to transfer authentication information on an authority to operate a vehicle on which the in-vehicle terminal is mounted, to the information terminal as transfer information, and
wherein the information terminal includes a transfer authority management module configured to transfer the transfer information to the in-vehicle terminal.

4. An information transfer system according to claim 1,
wherein the in-vehicle terminal further includes a notification information DB configured to store the notification information that has been received, and
wherein, in a case where a destination is set on the in-vehicle terminal, when a vehicle arrives at the destination, the transfer information extraction module extracts, as transfer information, the notification information that satisfies a predetermined condition from the notification information DB.

5. An information transfer system according to claim 4, wherein the transfer information extraction module is configured to extract, from the notification information DB, the notification information that satisfies at least one of conditions including the notification information that has not been notified yet, the notification information on a vicinity of the destination, the notification information having a specified category, the notification information on a coupon within a validity period, the notification information on a vicinity of a route through which the vehicle has passed until now, and the notification information on a vicinity of a route that has not been notified until now.

6. An information transfer system according to claim 1,
wherein the in-vehicle terminal further includes an input reception module configured to receive input of instruction from a user, and
wherein, when a transfer instruction to transfer the notification information is received from the user via the input reception module, the transfer information extraction module extracts the notification information relating to the transfer instruction as the transfer information.

7. An information transfer system according to claim 6,
wherein the in-vehicle terminal further includes a reading notification module configured to transmit to the server the notification information that has been notified to the user as read information,
wherein the server further includes a readingmanagement module configured to manage the read information acquired from the reading notification module, and
wherein, when a destination is not set on the in-vehicle terminal, the notification information extraction module transfers the notification information that is different from the read information and the notification information relating to the transfer instruction issued by the user, to the information terminal as the transfer information at a predetermined timing, and
wherein, before displaying the transfer information, the transfer information display module inquires from the reading management module latest read information immediately before the transfer information is displayed, and displays the transfer information that is different from the latest read information and the transfer information relating to the transfer instruction issued by the user.

8. An information transfer system according to claim 1, wherein the transfer information extraction module is configured to extract, as the transfer information, the notification information for acquiring from a user acceptance of update processing relating to an update program for the in-vehicle terminal.

9. An information trans1fer system according to claim 3,
wherein the vehicle on which the in-vehicle terminal is mounted includes a vehicle control authentication device configured to authenticate the authentication information,
wherein the in-vehicle terminal further includes:
an input reception module configured to receive input of instruction from a user; and
an authority management module configured to manage the authentication information,
wherein, when the input reception module receives an instruction to start the vehicle from the user, a vehicle control device issues a request to acquire the authentication information to the authority management module, and
wherein, when the in-vehicle terminal does not have the authentication information, the authority management module outputs to the vehicle control authentication device a signal indicating an error of the request to acquire the authentication information.

10. An information transfer system according to claim 3,
wherein the vehicle includes a vehicle control device configured to control the vehicle based on an automatic control request acquired from the information terminal,
wherein the information terminal further includes:
an automatic control requesting module configured to transmit the automatic control request to the vehicle control device; and
an input module configured to receive input of instruction from a user,
wherein, when an automatic control request to automatically control the vehicle is received via the input module, the transfer authority management module transmits the authentication information to the vehicle control authentication device, and
wherein, when a determination result obtained by the vehicle control authentication device indicates an authentication success, the transfer authority management module transmits the automatic control request acquired from the automatic control requesting module to the vehicle control device.

11. An information transfer system according to claim 9,
wherein, when the input reception module receives from the user a request for automatic operation of the vehicle, the authority management module transmits the authentication information to the vehicle control authentication device,
wherein, when a determination result obtained by the vehicle control authentication device indicates an authentication success, the authority management module allows the input reception module to receive input of instruction issued by the user relating to the automatic operation, and
wherein the input reception module transmits the input of instruction issued by the user relating to the automatic operation to the vehicle control device.

12. An in-vehicle terminal, comprising:
a notification information receiver configured to receive notification information;
a notification information DB configured to store the notification information;
a transfer information extraction module configuredto extract from the notification information DB a part of the notification information that satisfies a predetermined condition as transfer information to be displayed on a predetermined device; and
a transfer information transmitter configured to transmit the transfer information.

13. An in-vehicle terminal according to claim 12, wherein the transfer information extraction module is configured to extract, from the notification information DB, the notification information that satisfies at least one of conditions including the notification information that has not been notified yet, the notification information on a vicinity of the destination, the notification information having a specified category, the notification information on a coupon within a validity period, the notification information on a vicinity of a route through which the vehicle has passed until now, and the notification information on a vicinity of a route that has not been notified until now.

14. An in-vehicle terminal according to claim 13,
wherein the in-vehicle terminal further includes an input reception module configured to receive input of instruction from a user, and
wherein, when a transfer instruction to transfer the notification information is received from the user via the input reception module, the transfer information extraction module extracts, from the notification information DB, the notification information relating to the transfer instruction as the transfer information.

15. An information transfer method, which is executed in an information transfer system including an in-vehicle terminal, an information terminal, and a server, the information transfer method comprising the steps of:
extracting, by the in-vehicle terminal, as transfer information, a part of acquired notification information that is to be transferred to the information terminal;
transmitting, by the server, the transfer information acquired from the in-vehicle terminal to the information terminal at a predetermined timing; and
displaying, by the information terminal, the transfer information acquired from the server.
